Europäisches Patentamt

European Patent Office

Office européen des brevets

(19)

(11) Veröffentlichungsnummer: **0 042 042**
**B1**

(12) # EUROPÄISCHE PATENTSCHRIFT

(45) Veröffentlichungstag der Patentschrift:
**20.07.83**

(51) Int. Cl.³: **B 60 J 3/02**

(21) Anmeldenummer: **81102493.4**

(22) Anmeldetag: **02.04.81**

(54) **Sonnenblende für Fahrzeuge.**

(30) Priorität: **12.06.80 DE 3021984**

(43) Veröffentlichungstag der Anmeldung:
**23.12.81 Patentblatt 81/51**

(45) Bekanntmachung des Hinweises auf die Patenterteilung:
**20.07.83 Patentblatt 83/29**

(84) Benannte Vertragsstaaten:
**DE FR GB IT SE**

(56) Entgegenhaltungen:
**EP-A-0 034 215**
**EP-A-0 044 452**
**DE-B-2 551 633**
**FR-A-2 458 415**
**GB-A-1 354 485**
**US-A-2 264 603**
**US-A-2 304 223**

(73) Patentinhaber: **Gebr. Happich GmbH,
Postfach 10 02 49 Clausenbrücke 1,
D-5600 Wuppertal 1 (DE)**

(72) Erfinder: **Cziptschirsch, Kurt, Am Heckendorn 43,
D-5600 Wuppertal 2 (DE)**

(74) Vertreter: **Rehders, Jochen, c/o Fa. Gebr. Happich
GmbH Postfach 10 02 49 Clausenbrücke 1,
D-5600 Wuppertal 1 (DE)**

Sonnenblende für Fahrzeuge

Die Erfindung bezieht sich auf eine Sonnenblende für Fahrzeuge der im Oberbegriff des Anspruchs 1 angegebenen Art.

Derartige Sonnenblenden sind seit vielen Jahren gebräuchlich, wobei zum Stand der Technik beispielsweise auf die Druckschriften DE-U-18 41 742 und DE-B-25 51 633 hingewiesen wird. Die bekannten Sonnenblenden werden den Sicherheitsanforderungen, wie sie im Amtsblatt Nr. L 206/26 der Europäischen Gemeinschaften vom 29.7.1978 veröffentlicht worden sind, nicht mehr gerecht, so dass sie in Kürze nicht mehr in Fahrzeugen eingebaut werden dürfen, weil andernfalls die Zulassung der damit ausgerüsteten Fahrzeuge, die erstmals in Verkehr kommen, untersagt werden kann. Bei den Sonnenblenden der in Rede stehenden Art ist das im allgemeinen aus Stahlblech gebildete Drehlagergehäuse das kritische Teil, welches es begründen kann, dass die Sonnenblenden nicht den Bestimmungen der Richtlinie 74/60/EWG in der Fassung vom 19.5.1978 entsprechen.

Denn das Drehlagergehäuse besitzt sowohl an den Stirnenden als auch am unteren Abschluss relativ scharfe Kanten, die bei einem Unfall, bei dem ein Fahrzeuginsasse mit dem Kopf gegen den Sonnenblendenkörper prallen kann, möglicherweise die Polsterung durchdringen und Verletzungen herbeiführen.

Es ist demgemäss Aufgabe der Erfindung, eine Sonnenblende der eingangs genannten Art in bezug auf die Sicherheitsvorschriften zu verbessern, insbesondere dafür Sorge zu tragen, dass das Drehlagergehäuse keine Verletzungsgefahr mehr begründen kann.

Der Erfindung zufolge wird diese Aufgabe durch die im kennzeichnenden Teil des Anspruchs 1 angebenen Massnahmen gelöst.

Durch die Erfindung ist der Sonnenblendenkörper nunmehr mit einem Drehlagergehäuse ausgerüstet, welches vollkommen frei von äusseren scharfen Kanten ist, die bei einem Aufprallunfall die Polsterung durchdringen können. Damit werden die Sicherheitsanforderungen voll erfüllt. Das Drehlagergehäuse lässt sich besonders einfach und kostengünstig herstellen, kostengünstig insbesondere auch deshalb, weil durch die Bördelung eine Aussteifung bewirkt wird, die den Einsatz einer gegenüber den bekannten Vorbildern dünneren Blechdicke zulässt, wodurch auch noch eine Gewichtseinsparung erzielt wird.

Das Drehlagergehäuse weist gemäss Anspruch 3 zweckmässigerweise stirnseitige Öffnungen zum Einführen der Lagerachse und von Bereichen des Verstärkungsrahmens auf. Die Öffnungen können dabei dem Querschnitt der darin einzusteckenden Teile weitgehend angepasst sein, so dass sich auch hier keine unerwünschte bzw. bei Beaufschlagung zugängliche Kantenbildung einstellt.

Eine vorteilhafte Ausgestaltung der Erfindung nach Anspruch 4 besteht darin, dass das Drehlagergehäuse eine Rastfederaufnahme für eine die Lagerachse radial spannende Rastfeder aufweist, wobei die Randbereiche der die Rastfederaufnahme bildenden Gehäuseausnehmung leicht nach aussen gestellt sind, um mit der Aussenfläche der Rastfeder abzuschliessen. Während bei den herkömmlichen Sonnenblenden die Rastfeder, über die das Drehmoment und zumindest eine Raststellung des Sonnenblendenkörpers bestimmt wird, über das Drehlagergehäuse gesteckt wurde (vgl. insoweit z.B. DE-U 69 10 238), sieht die Erfindung eine durch das Drehlagergehäuse geschützte Anordnung der Rastfeder vor. Damit sind auch die scharfen Kanten der Rastfeder entschärft und können keine Verletzungsgefahr begründen.

In der Zeichnung sind Ausführungsbeispiele der Erfindung dargestellt. Es zeigen

Fig. 1 den Abschnitt eines Sonnenblendenkörpers im Drehlagerbereich,

Fig. 2 ein Drehlagergehäuse in schaubildlicher Ansicht,

Fig. 3 das Drehlagergehäuse nach Fig. 2 in Richtung des Pfeiles III gesehen und

Fig. 4 eine abgewandelte Ausführungsform eines Drehlagergehäuses.

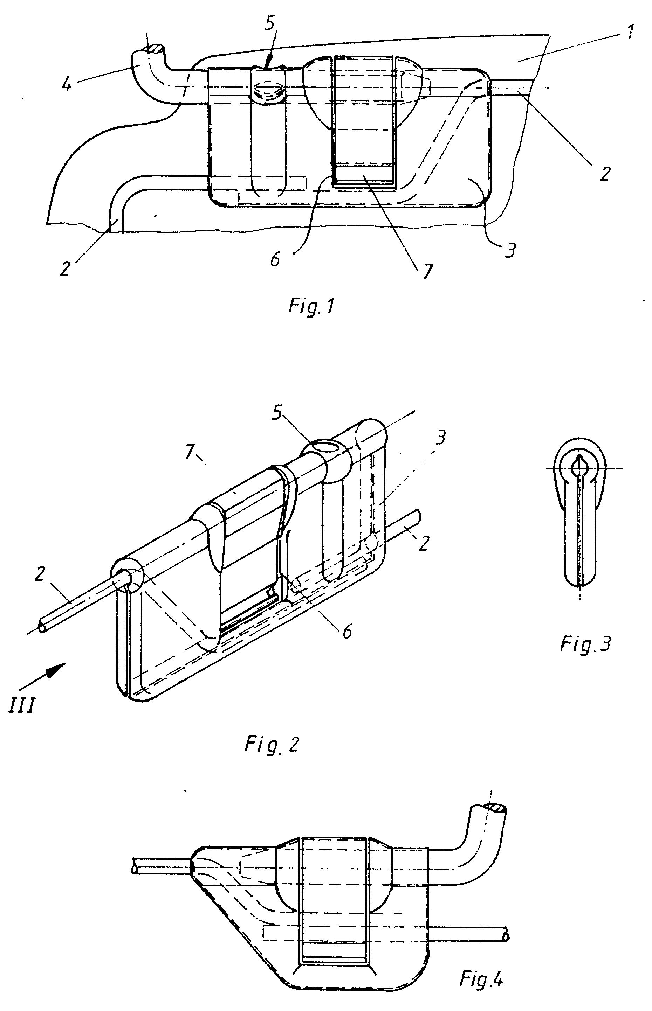

Fig. 1 zeigt bereichsweise einen Sonnenblendenkörper 1 mit einem darin eingelagerten, aus Draht gebildeten Verstärkungsrahmen 2 und einem Drehlagergehäuse 3, welches eine Lagerachse 4 lagert. Am Drehlagergehäuse 3 ist eine Sicherung 5 angeordnet, die ein Abziehen des Sonnenblendenkörpers 1 von der Lagerachse 4 verhindert. Ferner weist das Drehlagergehäuse 3 eine Gehäuseausnehmung 6 auf, durch die eine Rastfederaufnahme für eine Rastfeder 7 gebildet ist. Durch die Rastfeder 7, die entsprechend der Rastfeder nach der DE-PS 25 51 633 ausgebildet sein kann, wird das Drehmoment für den Sonnenblendenkörper und dessen Raststellungen bestimmt.

Das Drehlagergehäuse 3 besteht aus einem Blechzuschnitt, der durch Prägen und Biegen zu einem im wesentlichen als in sich geschlossener Hohlkörper verformt ist. Das Drehlagergehäuse 3 weist aussenseitig keine scharfen Kanten auf. Vielmehr sind äussere Abrundungsradien mit einer Grösse von mindestens 3,2 mm vorgesehen. Fig. 2 und 3 lassen erkennen, dass die freien Randbereiche des umgebogenen Blechzuschnittes als viertelkreisförmige Bördelkanten ausgebildet sind, deren freie Enden plan gegeneinandergesetzt sind. Die Stirnenden des Drehlagergehäuses 3 weisen Öffnungen auf, durch die die Lagerachse 4 und Bereiche, wie Endabschnitte des Verstärkungsrahmens 2 hindurchtreten.

Während die Fig. 1 und 2 eine Abzugssicherung 5 zeigen, wird bei dem Drehlagergehäuse 3 nach Fig. 4 die Abzugssicherung durch die Rastfeder 7 in Verbindung mit einer entsprechenden Ausbildung der Lagerachse 4 mit übernommen. Die Rastfeder 7 ist bei allen Ausführungsbeispielen geschützt und bündig abschliessend in der Gehäuseausnehmung 6 aufgenommen. Die die Gehäuseausnehmung begrenzenden Ränder sind hierfür leicht nach aussen gestellt, so dass sie bündig mit der Rastfeder 7 abschliessen. Die Rastfeder 7 ist unterendig an zumindest einem Drahtabschnitt des Verstärkungsrahmens 2 festgelegt.

**Patentansprüche**

1. Sonnenblende für Fahrzeuge mit einem in den gepolsterten Sonnenblendenkörper (1) eingelagerten Drehlagergehäuse (3), das von einem drehfest in dem Drehlagergehäuse gelagerten, in den Sonnenblendenkörper eingelagerten Verstärkungsrahmen (2) durchdrungen wird und ein Drehlager zur Aufnahme einer Lagerachse (4) zur Befestigung der Sonnenblende aufweist, wobei das Drehlagergehäuse aus zwei gegenüberliegenden, einen Abstand aufweisenden, parallelen Blechwänden besteht, die miteinander über einen nicht geschlossenen, das Drehlager bildenden Blechzylinder miteinander verbunden sind, dadurch gekennzeichnet, dass die freien Randbereiche des Drehlagergehäuses als viertelkreisförmige Bördelkanten mit äusseren Radien von mindestens 3,2 mm ausgebildet sind und dass die freien Enden der Bördelkanten so gegeneinander gerichtet sind, dass das Drehlagergehäuse bis auf die Lageröffnungen geschlossen ist.

2. Sonnenblende nach Patentanspruch 1, dadurch gekennzeichnet, dass die freien Enden der Bördelkanten plan gegeneinandergesetzt sind.

3. Sonnenblende nach Patentanspruch 1 oder 2, dadurch gekennzeichnet, dass das Drehlagergehäuse (3) stirnseitige Öffnungen zum Einführen der Lagerachse (4) und von Bereichen des Verstärkungsrahmens (2) aufweist.

4. Sonnenblende nach einem oder mehreren der Patentansprüche 1 bis 3, dadurch gekennzeichnet, dass das Drehlagergehäuse (3) eine Rastfederaufnahme für eine die Lagerachse (4) radial spannende Rastfeder (7) aufweist, wobei die Randbereiche der die Rastfederaufnahme bildenden Gehäuseausnehmung (6) leicht nach aussen gestellt sind, um mit der Aussenfläche der Rastfeder (7) abzuschliessen.

**Claims**

1. A sun visor for a vehicle, the visor comprising a padded visor body (1) housing a tilting-bearing casing (3) which is traversed by a reinforcing insert (2) secured therein fast against rotation and embedded in the visor body, and which includes a tilting bearing for accommodating a bearing shaft (4) serving to mount the visor, the bearing casing being formed of two spaced parallel sheet-metal panels facing each other and being joined to one another by an incomplete sheet-metal cylinder constituting the tilting bearing, characterized in that the free end portions of the casing are flanged into the shape of a quarter circle, that the radius of the outer faces of the flanged portions is at least 3,2 mm, and in that the free edges of the flanges oppose each other in such a way that the casing except for the bearing apertures is a closed one.

2. A sun visor according to claim 1, characterized in that the free edges of the flanges confront each other across a transverse plane.

3. A sun visor according to claim 1 or claim 2, characterized in that the tilting-bearing casing (3) is provided at its shorter end faces with apertures for the insertion of the bearing shaft (4) and of sections of the reinforcing insert (2).

4. A sun visor according to any one or more of the claims 1 to 3, characterized in that the tilting-bearing casing (3) is provided with a holder for a stop spring (7) radially clamping the bearing shaft (4), and in that the edge portions of a casing recess (6) constituting the holder are slightly outwardly directed so as to terminate with the outer surface of the stop spring (7).

**Revendications**

1. Pare-soleil pour véhicules avec un boîtier d'articulation (3) inséré dans le corps rembourré (1) du pare-soleil, dans lequel pénètre un cadre de reforcement (2) inséré dans le corps du pare-soleil, et qui présente un palier pour recevoir un axe d'articulation (4) pour la fixation du pare-soleil, tandis que le boîtier d'articulation se compose de deux parois parallèles en tôle, espacées entre elles et se faisant face, qui sont liées l'une à l'autre par un cylindre en tôle, non fermé, constituant le palier, caractérisé en ce que les bords libres du boîtier d'articulation sont conformés avec un repli en quart de cercle ayant un rayon extérieur d'au moins 3,2 mm, et en ce que les extrémités libres des arêtes repliées sont dirigées l'une vers l'autre de telle manière que le boîtier d'articulation est fermé jusqu'à l'ouverture du palier.

2. Pare-soleil selon la revendication 1, caractérisé en ce que les extrémités libres des arêtes repliées sont disposés l'une en face de l'autre.

3. Pare-soleil selon la revendication 1 ou 2, caractérisé en ce que le boîtier d'articulation (3) présente des ouvertures frontales pour l'introduction de l'axe d'articulation (4) et de régions du cadre de renforcement (2).

4. Pare-soleil selon une ou plusieurs des revendications 1 à 3, caractérisé en ce que le boîtier d'articulation (3) présente un logement pour un ressort d'encliquetage (7) enserrant radialement l'axe d'articulation (4), tandis que les régions bordant l'évidement (6) du boîtier qui constitue le logement du ressort d'encliquetage sont légèrement disposées vers l'extérieur, pour se raccorder avec la surface extérieure du ressort d'encliquetage (7).

Fig. 1

III

Fig. 2

Fig. 3

Fig. 4